# FASCICULE DE BREVET EUROPEEN

(11) **EP 1 102 672 B1**
(45) Date de publication et mention de la délivrance du brevet: **09.10.2002**
(21) Numéro de dépôt: 99936610.7
(22) Date de dépôt: 21.07.1999
(51) Int. Cl.: B29C 47/08, B65G 53/02, B29B 9/06, B29C 45/17

(54) **DISPOSITIF POUR PURGER UNE EXTRUDEUSE**
VORRICHTUNG ZUM ENTLEEREN VON EXTRUDERN
DEVICE FOR PURGING AN EXTRUDER

(30) Priorité: 03.08.1998 BE 9800582
(43) Date de publication de la demande: 30.05.2001
(73) Titulaire: Solvay Polyolefins Europe-Belgium (Société Anonyme), 1050 Bruxelles (BE)
(72) Inventeur: COUSIN, Frédéric, F-57430 Sarralbe (FR)
(74) Mandataire: Husemann, Claude
(86) Numéro de dépôt international: EP9905358
(87) Numéro de publication internationale: WO00007797

(56) Documents cités:
- EP-A- 0 086 400
- EP-A- 0 541 815
- US-A- 4 245 972
- US-A- 5 403 528
- US-A- 5 407 624
- PATENT ABSTRACTS OF JAPAN vol. 012, no. 113 (M-683), 9 avril 1988 (1988-04-09) & JP 62 240520 A (MITSUBISHI HEAVY IND LTD), 21 octobre 1987 (1987-10-21)

## Description

La présente invention concerne un dispositif pour purger une extrudeuse de polymères à grand débit.

Le démarrage d'une extrudeuse de polymères nécessite une purge préalable de l'extrudeuse. Cette purge a non seulement pour but d'éviter des contaminations du produit extrudé, mais aussi d'optimiser le conditionnement du polymère avant d'entamer la production.

Il est connu de réaliser une telle purge de démarrage à l'aide d'une vanne de purge équipant l'extrudeuse en amont de la filière. A ce moment, la vanne ne débite pas dans la filière mais dévie le polymère fondu sur une glissière qui guide le saucisson de polymère encore peu consistant et très gluant sur le sol qui a été préalablement humidifié.

Sur une extrudeuse à grand débit, une telle opération de purge nécessite l'intervention de plusieurs opérateurs. Des premiers opérateurs sectionnent, à l'aide de pelles, le saucisson de polymère en des blocs d'environ 15 kg et poussent ces blocs rapidement en-dehors de la zone de décharge de la glissière. D'autres opérateurs transfèrent, à l'aide de leur pelles, les blocs dans une zone de refroidissement, où ils peuvent refroidir et se solidifier à l'air. Les blocs refroidis sont alors chargés manuellement dans une benne.

Pour garantir un démarrage optimal de l'extrudeuse et permettre de régler efficacement la production, il importe d'avoir un débit de purge proche du débit nominal. Or, sur les extrudeuses modernes utilisées pour la granulation de polymères, le débit de polymère à la purge peut atteindre plus de 15 tonnes/heure. Il s'ensuit que les opérateurs effectuant la purge doivent travailler à une cadence très élevée pour évacuer plusieurs tonnes de polymère chaud et gluant, qui sont déversées par la vanne de purge sur le sol dans un espace de temps de 10 à 15 minutes. Ce travail est non seulement très exigeant en main-d'oeuvre et pénible du point de vue physique, mais aussi dangereux. En effet, les opérateurs sont constamment exposés à un risque de brûlures au contact du polymère à température élevée.

L'objet de la présente invention est de rendre l'opération de purge d'une extrudeuse à grand débit moins pénible et moins dangereuse.

Conformément à l'invention, cet objectif est atteint par un dispositif pour purger une extrudeuse de polymères selon la revendication 1.

Selon l'invention l'extrudeuse comprend, de façon connue en soi, une vanne de purge permettant d'évacuer le flux de polymère fondu. Conformément à l'invention, un dispositif de coupe est agencé à la sortie de la vanne de purge, pour sectionner le flux continu de polymère fondu sortant de la vanne de purge en blocs. Un dispositif de transport est agencé à la sortie du dispositif de coupe, pour entraîner ces blocs immédiatement à une certaine distance de l'extrudeuse. De préférence le dispositif est un dispositif hydraulique qui entraîne les blocs dans un courant de liquide, généralement aqueux, à une certaine distance de l'extrudeuse. Il sera apprécié qu'un tel courant de liquide est un moyen particulièrement sûr et efficace pour évacuer rapidement les blocs de polymère encore peu consistants et très gluants. En effet, les blocs de polymère sont tout de suite énergiquement refroidis par contact direct avec le liquide de transport, ce qui provoque une solidification quasi instantanée de leur surface extérieure. Le courant de liquide de transport évite efficacement que les blocs ne s'agglutinent à nouveau ou collent au dispositif de transport. Il s'ensuit que le dispositif de purge fonctionne de façon très fiable et ne nécessite quasi aucune intervention humaine pour évacuer le polymère fondu sous forme de blocs. Ce dispositif contribue dès lors à une amélioration appréciable des conditions de travail et de sécurité lors de la purge d'une extrudeuse. En utilisant le dispositif proposé, on nécessite sensiblement moins d'opérateurs pour la purge de démarrage, tout en pouvant travailler avec des débits de purge beaucoup plus élevés. Reste à noter que le dispositif proposé permet aussi un meilleur conditionnement des blocs de polymère en vue de leur recyclage. Il permet notamment de produire des blocs de polymère de taille plus petite et de poids plus uniforme que la purge manuelle.

Le dispositif de transport hydraulique comprend avantageusement une goulotte d'évacuation des blocs située en-dessous du dispositif de coupe. Un dispositif d'injection d'un liquide équipe alors cette goulotte de façon à créer dans celle-ci un courant de liquide entraînant les blocs. De cette façon on assure une évacuation rapide et sûre des blocs en-dehors de la zone de décharge de la vanne de purge.

Le dispositif de transport hydraulique peut aussi comprendre une rigole pour recevoir lesdits blocs découpés par le dispositif de coupe. Cette rigole est alors munie d'un dispositif de circulation d'un liquide, de façon à ce que les blocs soient entraînés dans la rigole par un courant de liquide et ne puissent être en contact ou boucher la rigole. Cette rigole constitue un moyen de transport simple, efficace et sûr pour transporter les blocs de polymère, qui ne sont pas encore entièrement solidifiés, à un endroit distant de la zone d'extrusion proprement dite.

Le dispositif de transport hydraulique débouche de préférence dans un dispositif de collecte des blocs. Ce dernier est avantageusement équipé de façon à retenir les blocs tout en laissant passer le liquide ayant transporté lesdits blocs.

Un tel dispositif de collecte des blocs peut par exemple comprendre une benne réceptrice agencée dans une fosse de façon à ce que les blocs entraînés par le courant de liquide tombent dans la benne. Le fond et/ou les parois latérales de la benne comprennent alors avantageusement des ouvertures d'évacuation du liquide, à travers lesquelles le liquide peut s'écouler lorsque la benne est soulevée. De préférence le fond et les parois latérale de la benne comprennent des ouvertures d'évacuation.

Le dispositif de coupe comprend de préférence un couteau à double tranchant, qui est guidé de façon coulissante dans une structure de support fixée sur la section de sortie de la vanne de démarrage. Ce couteau est avantageusement actionné par un moteur linéaire, tel que par exemple un cylindre pneumatique à double action commandé par un relais temporisateur. En ajustant le temps qui s'écoule entre deux actionnements successifs du cylindre, on peut ajuster la taille des blocs de polymère en fonction du débit de purge.

D'autres particularités et caractéristiques de l'invention ressortiront de la description détaillée d'un mode de réalisation avantageux de l'invention, qui se réfère aux dessins annexés. Ces derniers montrent:
- Figure 1:: un schéma d'un dispositif pour purger une extrudeuse de polymères, dessiné en tant que coupe longitudinale à travers le dispositif;
- Figure 2:: une vue en plan d'un dispositif de coupe équipant un dispositif tel que représenté sur la Figure 1;
- Figure 3:: une vue en élévation d'une goulotte d'évacuation équipant un dispositif tel que représenté sur la Figure 1;
- Figure 4:: une vue en plan de la goulotte d'évacuation de la Figure 3.

Sur les figures, les mêmes chiffres de référence désignent des éléments identiques ou similaires.

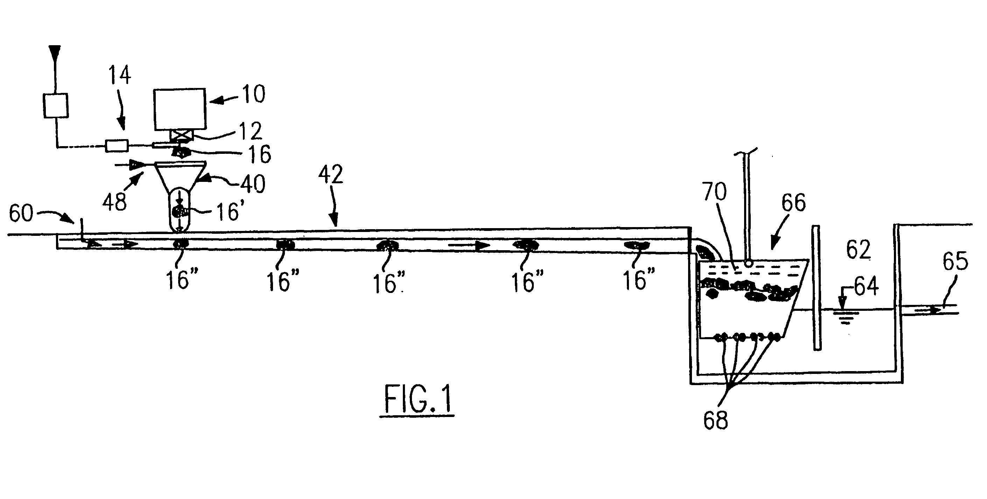

Sur la Figure 1, le chiffre de référence 10 repère une représentation schématique d'un composant d'une extrudeuse grand débit, telle qu'utilisée par exemple pour granuler des polymères, notamment des polyoléfines. Ce composant 10 comprend une vanne de purge 12 qui, lors du démarrage évacue le polymère fondu en-dehors de l'extrudeuse vers le sol sans devoir passer par la filière. Le polymère fondu sort de la vanne de purge 12 sous forme d'un saucisson continu de polymère, qui a la consistance d'une pâte gluante.

A la sortie de la vanne de purge est agencé un dispositif de coupe 14. Celui-ci est apte à sectionner le flux continu de polymère à la sortie de la vanne de purge 12 en blocs isolés. Le chiffre de référence 16 repère un tel bloc à la sortie du dispositif de coupe 14.

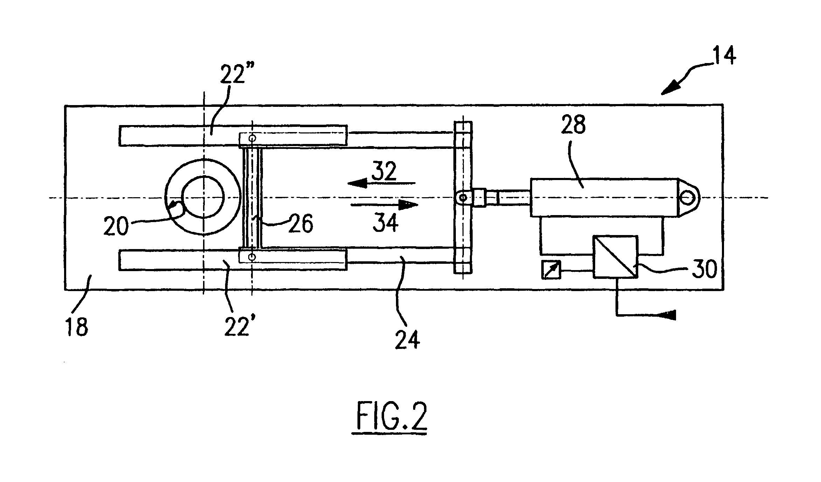

Une exécution particulièrement simple et fiable du dispositif de coupe 14 sera maintenant décrite en détail à l'aide de la Figure 2. Une plaque de support 18, munie d'une ouverture 20, est fixée sur la section de sortie de la vanne de purge 12, de façon à ce que le flux de polymère sortant de la vanne de purge 12 passe à travers l'ouverture 20. Du côté opposé de la vanne de purge 12, la plaque 18 est munie de deux glissières 22', 22". Dans ces dernières est monté de façon coulissante un cadre porte-lame 24. Ce dernier est équipé d'une lame à double tranchant 26. Le cadre porte-lame 24 est actionné par un cylindre pneumatique 28 à double action. Une vanne directionnelle 30, munie d'un relais temporisateur, permet d'alimenter le cylindre 28 de façon à ce que, dans un premier temps, la lame 26 passe devant l'ouverture 20 dans le sens de la flèche 32, sectionnant une première fois le saucisson de polymère à la sortie de l'ouverture 20, et qu'elle repasse devant l'ouverture 20, dans le sens de la flèche 34, après un intervalle de temps DT1 présélectionné, sectionnant une deuxième fois le saucisson de polymère à la sortie de l'ouverture 20. Le même cycle est répété après un intervalle de temps DT2. En modifiant les intervalles de temps DT1 et DT2, on peut naturellement modifier le poids des blocs 16. Généralement les intervalles de temps DT1 et DT2 seront choisis identiques, de façon à obtenir des blocs de poids quasi identiques. Reste à noter que toute modification du débit de purge nécessite évidemment un ajustage des intervalles de temps DT1 et DT2, pour garantir un poids constant des blocs.

A la sortie du dispositif de coupe 14, le bloc de polymère 16, qui est encore peu consistant et très gluant, tombe dans un dispositif de transport hydraulique où il est immédiatement entraîné par un courant de liquide, normalement un courant d'eau. Ce courant de liquide évacue le bloc 16 en-dehors de la zone de décharge de la vanne de purge 12, tout en le refroidissant.

Le dispositif de transport hydraulique montré sur la Figure 1 comprend une goulotte 40 et une rigole d'évacuation 42. La goulotte 40 est agencée immédiatement en-dessous du dispositif de coupe 14. Elle reçoit le bloc 16 tombant verticalement du dispositif de coupe 14 et le guide le long d'une trajectoire courbe dans la rigole 42, qui est située plus bas que le dispositif de coupe 14. Le chiffre de référence 16' repère un bloc de polymère qui est entraîné par un courant de liquide à travers la goulotte 40.

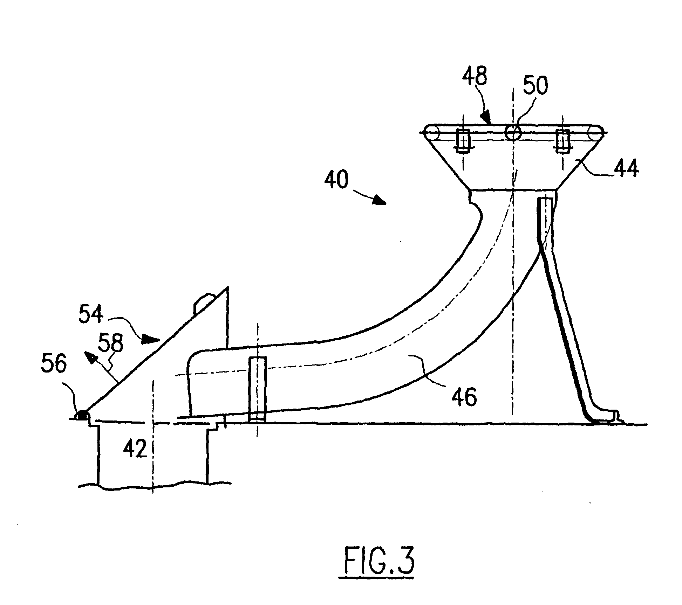

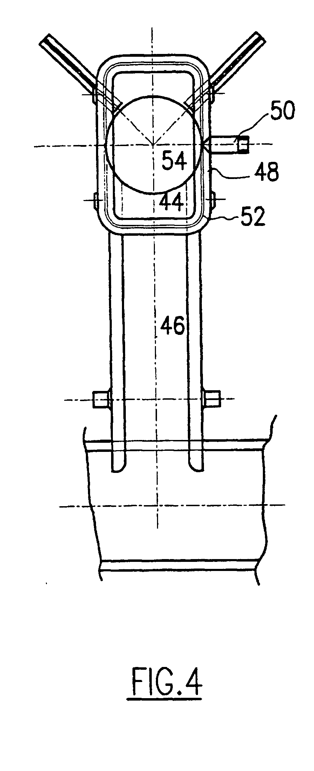

Une exécution préférentielle de la goulotte 40 sera maintenant décrite à l'aide des Figures 3 et 4. Cette goulotte 40 se compose principalement d'un entonnoir de réception 44 à axe vertical et d'un canal d'évacuation courbe 46. L'entonnoir de réception 44 est équipé d'un dispositif d'injection de liquide, qui est repéré globalement par le chiffre de référence 48. Comme on le voit le mieux sur la Figure 4, le dispositif d'injection 48 comprend un canal annulaire qui forme le bord supérieur de l'entonnoir 44. Un raccord 50 permet d'alimenter ce canal annulaire avec un liquide, généralement de l'eau froide. Sur sa face inférieure le canal 48 est muni d'une fente 52. Cette fente 52 est orientée de façon à injecter le liquide dans l'entonnoir 44, le long des parois intérieures de celui-ci, et à créer un courant forcé de liquide vers une embouchure 54 dans le canal 46. Ce courant forcé de liquide recouvre entièrement les parois internes de l'entonnoir 44 et empêche ainsi une adhésion du polymère aux parois de la goulotte 40. En provoquant une évacuation rapide du morceau de polymère en-dehors de l'entonnoir 44, le courant réduit aussi le risque d'agglutination de morceaux de polymère dans le dispositif de transport hydraulique. Enfin, le contact direct entre le polymère tombant du dispositif de coupe 14 et le courant forcé de liquide dans l'entonnoir 44, provoque une solidification superficielle quasi instantanée du polymère, ce qui favorise également l'évacuation sans problèmes des blocs de polymère.

Sur la Figure 3 on voit que le canal d'évacuation 46 de la goulotte 40 débouche quasi tangentiellement dans la rigole 42. Ceci a pour but d'éviter un freinage trop important des blocs de polymère, lorsque ces derniers tombent de la goulotte 40 dans un courant forcé de liquide circulant dans la rigole 42. Reste à noter que dans l'exécution représentée sur la Figure 3, la goulotte est disposée perpendiculairement à la rigole 42, et que l'on a prévu un écran 54 le long du bord de la rigole 42 qui se trouve vis-à-vis de la section de sortie de la goulotte 40. Le but de cet écran est d'éviter des projections de liquide et/ou de blocs de polymère en-dehors de la rigole 42. L'écran est par ailleurs muni d'articulations 56, qui sont disposées de façon à pouvoir le basculer dans le sens de la flèche 58 pour avoir accès à la rigole 42 à cet endroit.

Cet écran peut également servir à obturer l'ouverture de la rigole une fois l'extrudeuse en régime de manière à assurer une plus grande sécurité.

Dans la Figure 1 on voit une coupe longitudinale à travers la rigole 42. Il s'agit ici d'une rigole enterrée, mais il est évident qu'on pourrait aussi prévoir un canal suspendu ou supporté au-dessus du sol. En amont du point où la goulotte 40 décharge les blocs 16' dans la rigole 42, celle-ci dispose de sa propre alimentation en liquide 60. Le débit et la pression de cette alimentation en liquide 60 sont ajustés de façon à créer dans la rigole 42 un courant de liquide forcé entraînant vigoureusement les blocs de polymère dès leur chute dans la rigole 42. On évite ainsi que des blocs de polymère découpés successivement ne puissent se rejoindre, s'agglutiner et boucher éventuellement la rigole 42. Les chiffres de référence 16" indiquent des blocs de polymère sur leur trajet dans la rigole 42.

Dans la Figure 1 on voit que la rigole 42 débouche dans une fosse 62. Cette fosse 62 est généralement localisée à une certaine distance de l'espace d'extrusion proprement dit. Elle peut même être située en-dehors du bâtiment d'extrusion. Un tuyau d'écoulement 65 débouche à une certaine hauteur du fond dans la fosse 62. Il assure qu'un niveau de liquide 64 sensiblement constant est maintenu dans la fosse 62.

Une benne 66 est agencée dans la fosse 62 en-dessous de l'embouchure de la rigole 42, de façon à ce que les blocs 16" soient entraînés avec le courant de liquide sortant de la rigole 42 dans la benne 66. Cette dernière est munie d'ouvertures d'évacuation du liquide 68 dans son fond, de sorte que le liquide puisse s'écouler dans la fosse 62, tandis que les blocs de polymère sont retenus dans la benne 66. Il sera noté que la benne 66 est partiellement immergée dans le liquide stagnant dans la fosse. Ceci assure que les blocs reçus dans la benne sont toujours immergés dans le liquide refroidissant, même lorsque la rigole 42 ne débite pas. Des ouvertures 70 dans la partie supérieure de la benne 66 évitent par contre que le liquide ne monte trop haut dans la benne 66, lorsque la rigole 42 débite. Un débordement de la benne pourrait en effet entraîner des blocs de polymère dans la fosse 62. Pour vider la benne 66, celle-ci est simplement soulevée à l'aide d'un dispositif de manutention approprié. Le liquide s'écoule à travers les ouvertures 68 dans le fond de la benne 66. Après évacuation complète du liquide, les blocs recueillis dans la benne 66 peuvent être déversés dans un conteneur par un simple basculement de la benne 66 ou encore par ouverture de son fond.

Reste à noter que plusieurs rigoles 42 peuvent déboucher dans la même fosse 62 et qu'une rigole 42 peut bien entendu desservir plusieurs extrudeuses.

## Revendications

1. Dispositif pour purger une extrudeuse de polymères, comprenant une vanne de purge situé en amont de la filière (12) pour évacuer un polymère fondu en-dehors de l'extrudeuse sous forme d'un flux continu; **caractérisé par**:
- un dispositif de coupe (14) agencé à la sortie de ladite vanne de purge (12), ledit dispositif de coupe (14) étant apte à sectionner en blocs le flux continu de polymère sortant de la vanne de purge (12); et
- un dispositif de transport (40, 42) agencé à la sortie dudit dispositif de coupe (14), de façon à entraîner lesdits blocs (16') immédiatement à une certaine distance de l'extrudeuse.

2. Dispositif selon la revendication 1, **caractérisé en ce que** le dispositif de transport est un dispositif hydraulique qui entraîne les blocs dans un courant de liquide.

3. Dispositif selon la revendication 2, **caractérisé en ce que** le dispositif de transport hydraulique comprend une goulotte d'évacuation (40) des blocs située en-dessous dudit dispositif de coupe (14); un dispositif d'injection (48) d'un liquide équipant la goulotte (40) de façon à créer dans la goulotte (40) un courant de liquide entraînant les blocs.

4. Dispositif selon l'une quelconque des revendications 2 et 3, **caractérisé en ce que** le dispositif de transport hydraulique comprend une rigole (42) pour recevoir lesdits blocs découpés par ledit dispositif de coupe (14); ladite rigole (42) étant munie d'un dispositif de circulation d'un liquide (60), de façon à ce que les blocs soient entraînés dans la rigole (42) par un courant vigoureux de liquide.

5. Dispositif selon les revendications 2 à 4, **caractérisé en ce que** ladite goulotte (40) est agencée de façon à ce que les blocs tombant de la goulotte (40) dans ladite rigole (42) soient emportés de suite par le courant de liquide dans la rigole (42).

6. Dispositif selon l'une quelconque des revendications 2 à 5, **caractérisé en ce que** le dispositif de transport hydraulique débouche dans un dispositif de collecte des blocs, ce dernier étant équipé de façon à retenir les blocs tout en laissant passer le liquide ayant transporté lesdits blocs.

7. Dispositif selon la revendication 6, **caractérisé en ce que** ledit dispositif de collecte des blocs comprend une benne réceptrice (66) agencée dans une fosse (62) de façon à ce que les blocs entraînés par le courant de liquide tombent dans ladite benne (66).

8. Dispositif selon la revendication 7, **caractérisé en ce que** le fond de ladite benne (66) comprend des ouvertures d'évacuation du liquide (68) à travers lesquelles le liquide peut s'écouler lorsque la benne (66) est soulevée.

9. Dispositif selon l'une quelconque des revendications 1 à 8, **caractérisé en ce que** le dispositif de coupe (14) comprend un couteau (24, 26) guidé de façon coulissante dans une structure de support (18, 22', 22") fixée sur la section de sortie de la vanne de purge (12).

10. Dispositif selon la revendication 9, **caractérisé en ce que** le couteau (24, 26) est actionné par un cylindre pneumatique (28) commandé par un relais temporisateur.

11. Dispositif selon la revendication 9 ou 10, **caractérisé en ce que** le couteau coulissant comprend une lame (26) à double tranchant.

## Patentansprüche

1. Vorrichtung zum Entleeren eines Extruders von Polymeren, umfassend ein stromaufwärts von der Düse (12) gelegenes Ablassventil zum Abführen eines geschmolzenen Polymers aus dem Extruder heraus in Form eines kontinuierlichen Flusses, **gekennzeichnet durch**:
- eine am Austritt des Ablassventils (12) angeordnete Schneidvorrichtung (14), wobei die Schneidvorrichtung (14) dazu fähig ist, den aus dem Ablassventil (12) austretenden kontinuierlichen Polymerfluss in Blöcke zu zertrennen; und
- eine Transportvorrichtung (40, 42), die so am Austritt der Schneidvorrichtung (14) angeordnet ist, dass die Blöcke (16') sofort in eine gewisse Entfernung vom Extruder mitgeführt werden.

2. Vorrichtung nach Anspruch 1, **dadurch gekennzeichnet, dass** die Transportvorrichtung eine hydraulische Vorrichtung ist, welche die Blöcke in einem Flüssigkeitsstrom mitführt.

3. Vorrichtung nach Anspruch 2, **dadurch gekennzeichnet, dass** die hydraulische Transportvorrichtung eine unterhalb der Schneidvorrichtung (14) gelegene Austragsrutsche (40) für die Blöcke umfasst; wobei die Rutsche (40) mit einer Einspritzvorrichtung (48) für eine Flüssigkeit ausgestattet ist, so dass in der Rutsche (40) ein die Blöcke mitführender Flüssigkeitsstrom erzeugt wird.

4. Vorrichtung nach einem der Ansprüche 2 und 3, **dadurch gekennzeichnet, dass** die hydraulische Transportvorrichtung ein Gerinne (42) umfasst, um die von der Schneidvorrichtung (14) abgetrennten Blöcke aufzunehmen; wobei das Gerinne (42) mit einer Vorrichtung (60) zum Umwälzen einer Flüssigkeit versehen ist, so dass die Blöcke im Gerinne (42) von einem kräftigen Flüssigkeitsstrom mitgeführt werden.

5. Vorrichtung nach den Ansprüchen 2 bis 4, **dadurch gekennzeichnet, dass** die Rutsche (40) so angeordnet ist, dass die von der Rutsche (40) in das Gerinne (42) fallenden Blöcke sofort vom Flüssigkeitsstrom im Gerinne (42) mitgerissen werden.

6. Vorrichtung nach einem der Ansprüche 2 bis 5, **dadurch gekennzeichnet, dass** die hydraulische Transportvorrichtung in eine Sammelvorrichtung für die Blöcke mündet, wobei diese letztere so ausgestattet ist, dass sie die Blöcke zurückhält, wobei sie die Flüssigkeit, welche die Blöcke transportiert hat, durchlässt.

7. Vorrichtung nach Anspruch 6, **dadurch gekennzeichnet, dass** die Sammelvorrichtung für die Blöcke eine Aufnahmemulde (66) umfasst, die so in einer Grube (62) angeordnet ist, dass die vom Flüssigkeitsstrom mitgeführten Blöcke in die Mulde (66) fallen.

8. Vorrichtung nach Anspruch 7, **dadurch gekennzeichnet, dass** der Boden der Mulde (66) Öffnungen (68) zum Abführen der Flüssigkeit umfasst, durch welche die Flüssigkeit ablaufen kann, wenn die Mulde (66) angehoben wird.

9. Vorrichtung nach einem der Ansprüche 1 bis 8, **dadurch gekennzeichnet, dass** die Schneidvorrichtung (14) ein Schneidmesser (24, 26) umfasst, das in verschiebbarer Weise in einer auf dem Austrittsquerschnitt des Ablassventils (12) befestigten Trägerstruktur (18, 22', 22'') geführt ist.

10. Vorrichtung nach Anspruch 9, **dadurch gekennzeichnet, dass** das Schneidmesser (24, 26) von einem durch ein Zeitglied gesteuerten Druckluftzylinder (28) betätigt wird.

11. Vorrichtung nach Anspruch 9 oder 10, **dadurch gekennzeichnet, dass** das verschiebbare Schneidmesser eine zweischneidige Klinge (26) umfasst.

## Claims

1. Device for purging a polymer extruder, comprising a purge valve located upstream of the die (12) for discharging a molten polymer from the extruder in the form of a continuous stream; **characterized by**:
- a cutting device (14) arranged at the exit of the said purge valve (12), the said cutting device (14) being capable of cutting the continuous stream of polymer leaving the purge valve (12) into blocks; and
- a conveying device (40, 42) arranged at the exit of the said cutting device (14), so as to transport the said blocks (16') immediately a certain distance away from the extruder.

2. Device according to Claim 1, **characterized in that** the conveying device is a hydraulic device which transports the blocks in a flow of liquid.

3. Device according to Claim 2, **characterized in that** the hydraulic conveying device comprises a block-discharge chute (40) located beneath the said cutting device (14); the chute (40) being equipped with a liquid-injection device (48) so as to create in the chute (40) a flow of liquid for transporting the blocks.

4. Device according to either one of Claims 2 and 3, **characterized in that** the hydraulic conveying device comprises a channel (42) for receiving the said blocks cut by the said cutting device (14); the said channel (42) being equipped with a device (60) for circulating a liquid so that the blocks are transported in the channel (42) by a strong flow of liquid.

5. Device according to Claims 2 to 4, **characterized in that** the said chute (40) is arranged so that the blocks dropping from the chute (40) into the said channel (42) are successively carried away by the flow of liquid in the channel (42).

6. Device according to any one of Claims 2 to 5, **characterized in that** the hydraulic conveying device opens into a device for collecting the blocks, this device being equipped in such a way as to hold the blocks while at the same time allowing the liquid which conveyed the said blocks to pass through.

7. Device according to Claim 6, **characterized in that** the said device for collecting the blocks comprises a collecting skip (66) arranged in a pit (62) so that the blocks transported by the flow of liquid drop into the said skip (66).

8. Device according to Claim 7, **characterized in that** the bottom of the said skip (66) comprises openings for discharging the liquid (68), through which openings the liquid can flow when the skip (66) is raised.

9. Device according to any one of Claims 1 to 8, **characterized in that** the cutting device (14) comprises a knife (24, 26) guided in sliding in a support structure (18, 22', 22'') fixed on the exit section of the purge valve (12).

10. Device according to Claim 9, **characterized in that** the knife (24, 26) is actuated by a pneumatic cylinder (28) controlled by a timing relay.

11. Device according to Claim 9 or 10, **characterized in that** the sliding knife has a two-edged blade (26).
